# EUROPÄISCHE PATENTSCHRIFT

(11) **EP 2 245 225 B1**
(45) Veröffentlichungstag und Bekanntmachung des Hinweises auf die Patenterteilung: **14.06.2017**
(21) Anmeldenummer: 09712751.8
(22) Anmeldetag: 16.02.2009
(51) Int. Cl.: D06F 58/20

(54) **HAUSGERÄT ZUM TROCKNEN EINES FEUCHTEN GUTES MIT EINER KÜHLANORDNUNG UND EINER HEIZANORDNUNG**
DOMESTIC APPLIANCE FOR DRYING A HUMID PRODUCT, COMPRISING A COOLING ASSEMBLY AND A HEATING ASSEMBLY
APPAREIL MÉNAGER POUR SÉCHER UN ARTICLE HUMIDE, MUNI D'UN SYSTÈME DE REFROIDISSEMENT ET D'UN SYSTÈME DE CHAUFFAGE

(30) Priorität: 19.02.2008 DE 102008009783
(43) Veröffentlichungstag der Anmeldung: 03.11.2010
(73) Patentinhaber: BSH Hausgeräte GmbH, 81739 München (DE)
(72) Erfinder: KÜHL, Hans-Detlef, 44229 Dortmund (DE); STOLZE, Andreas, 14612 Falkensee (DE)
(86) Internationale Anmeldenummer: PCT/EP2009/051762
(87) Internationale Veröffentlichungsnummer: WO 2009/103670

(56) Entgegenhaltungen:
- EP-A2- 1 884 586
- DE-A1- 4 434 205
- DE-C- 402 305

## Beschreibung

Die Erfindung betrifft ein Hausgerät zum Trocknen eines feuchten Gutes mittels eines in einem Prozessluftkanal führbaren Prozessluftstroms, durch welchen durchströmbar sind: eine Behandlungskammer mit dem Gut, eine Kühlanordnung zum Abkühlen und Auskondensieren des Prozessluftstroms nach Durchströmen der Behandlungskammer, wobei die Kühlanordnung einen ersten Wärmetauscher aufweist, durch welchen Wärme aus dem Prozessluftstrom einem Arbeitsfluid zuführbar ist, und nachgeschaltet eine Heizanordnung zum Erwärmen des Prozessluftstroms vor Durchströmen der Behandlungskammer, wobei die Heizanordnung einen zweiten Wärmetauscher aufweist, durch welchen dem Prozessluftstrom aus dem Arbeitsfluid Wärme zuführbar ist.

Ein solches Hausgerät geht hervor aus der DE 44 34 205 A1. Dieser Schrift gemäß sind der erste und der weite Wärmetauscher eingebunden in eine Kompressor-Wärmepumpe, in welcher ein zirkulierendes Arbeitsfluid wechselweise verdampft und verflüssigt wird.

In der DE 40 23 000 C2, der DE 197 38 735 C2 oder der WO 2006/029953 A1 ist jeweils ein Hausgerät beschrieben, bei dem die Kühlanordnung und die Heizanordnung zu einer Wärmepumpe gehören, in welcher jedenfalls ein Teil der Wärme, die dem Luftstrom in der Kühlanordnung entzogen wird, dem Luftstrom in der Heizanordnung wieder zugeführt wird.

Gemäß der DE 40 23 000 C2 kommt eine Kompressor-Wärmepumpe zum Einsatz, in welcher ein Arbeitsmittel (Kohlendioxid oder chlorierter und/oder fluorierter Kohlenwasserstoff) in gasförmigem Zustand von einem Kompressor komprimiert, dann in einem ersten Wärmetauscher unter Abgabe von Wärme verflüssigt, darauf beim Durchtritt durch eine Drossel entspannt und in einem zweiten Wärmetauscher unter Aufnahme von Wärme verdampft wird. Schließlich gelangt es zum Kompressor zurück. Gemäß DE 197 38 735 C2 kommt eine Wärmepumpe zum Einsatz, bei der ein erstes Arbeitsmittel (Ammoniak) von einem zweiten Arbeitsmittel (Wasser) periodisch absorbiert und desorbiert wird.

Gemäß der WO 2006/029953 A1 kommt eine Wärmepumpe zum Einsatz, in welcher zum Transport der Wärme thermoelektrische Elemente, auch als Peltier-Elemente bezeichnet und aufgebaut mit speziellen Halbleiterwerkstoffen, fungieren.

Aus der DE 1 410 206 A ist eine Waschmaschine bekannt, in welcher Waschgut nicht nur gewaschen, sondern auch getrocknet werden kann. Für die dazu erforderlichen zusätzlichen Einrichtungen zeigt die Schrift mehrere Alternativen. Es können eine elektrische Heizvorrichtung zum Erwärmen eines zur Trocknung von Waschgut eingesetzten Luftstroms und ein einfacher Wärmetauscher zum Abkühlen des erwärmten Luftstroms nach dem Beaufschlagen des Waschguts vorgesehen sein, wobei der Heizer und der Kühler aber auch zu einer Wärmepumpeneinrichtung gehören können. Die Wärmepumpeneinrichtung kann auch derartig ausgestaltet sein, dass sie mit Peltier-Elementen zur Nutzung des thermoelektrischen Effekts arbeitet.

Eine aus einem in der Datensammlung "Patent Abstracts of Japan" zur JP 08 057 194 A gehörigen englischen Kurzauszug hervorgehende Vorrichtung zum Trocknen von Waschgut enthält in ihrem ersten Kanalsystem neben einem Heizer und einem Kühler, welche beide zu einer thermoelektrisch betreibbaren Wärmepumpeneinrichtung gehören, einen dem Kühler vorgeschalteten zusätzlichen Wärmetauscher zur Abkühlung des von dem Waschgut abgeführten Luftstroms und eine dem Heizer nachgeschaltete zusätzliche Heizeinrichtung zum weiteren Erwärmen des Luftstroms vor dem Beaufschlagen des Waschguts.

Aus der Schrift "Wärmetransformationsprozesse ohne Phasenumwandlung" von Dr. Hans-Detlev Kühl, seit dem 26.11.2006 im Internet unter der Adresse http://hdl.handle.net/2003/2798 verfügbar, siehe insbesondere Seiten 1 bis 29, sind ein Stirling-Prozess und ein Vuilleumier-Prozess als Beispiele für einen regenerativen Gaskreisprozess bekannt. Jeder dieser Prozesse ist geeignet zum Einsatz in einer Wärmepumpe oder einem Kältegerät, wobei Anwendungen in der Energietechnik (z. B. bei der Gebäudeheizung) oder zur Stofftrennung (insbesondere Luftverflüssigung und - zerlegung) erwogen werden.

Zum Vuilleumier-Prozess wird auch auf das US-Patent 1,275,507 des Erfinders Rudolph Vuilleumier sowie die prioritätsgleiche DE 402 305 C verwiesen.

In allen gattungsgemäßen Hausgeräten mit Wärmepumpen, welche nicht den thermoelektrischen Effekt nutzen, erfolgen das Aufnehmen und das Freisetzen von Wärme bei Phasenübergängen im Arbeitsmittel. Es müssen spezifische Bedingungen hinsichtlich Druck und Temperatur eingehalten werden, damit die erforderlichen Phasenübergänge erreicht werden und effektiv genutzt werden können. Dies macht die Anpassung der Wärmepumpen an die in einem Hausgerät zu fordernden Temperaturniveaus unter Umständen schwierig. Die thermoelektrische Wärmepumpe erfordert den Einsatz ungewöhnlicher, teurer Halbleiterkomponenten und stellt spezifische Probleme hinsichtlich Wärmeisolierung und Trockenluftführung, da Wärme dort nur über vergleichsweise kurze räumliche Distanzen gepumpt werden kann. Dies macht die Konstruktion eines entsprechenden Hausgeräts schwierig. Zudem erreicht jede bekannte Wärmepumpe in einem Hausgerät bei ihrer Inbetriebsetzung nur relativ langsam die optimalen Betriebsbedingungen. Dadurch ergibt sich ein erweiterter Zeitbedarf für einen Trocknungsprozess, was von einem Benutzer als sehr nachteilig empfunden werden muss, nicht zuletzt deshalb, weil Hausgeräte mit Wärmepumpen üblicherweise zu sehr hohen Preisen verkauft und mit entsprechend hohen Erwartungen erworben werden.

Aufgabe der vorliegenden Erfindung ist es, eine Möglichkeit zur Trocknung eines feuchten Guts im Haushalt bereitzustellen, welche mit einem umweltfreundlichen, insbesondere natürlichen Kältemittel, unter Beachtung einer kompakten Bauweise und eine ausreichende Entfeuchtungsleistung bereitzustellen.

Diese Aufgabe wird mittels eines Hausgeräts nach Anspruch 1 gelöst. Vorteilhafte Ausgestaltungen sind insbesondere den abhängigen Ansprüchen entnehmbar.

Das Hausgerät ist zum Trocknen eines feuchten Gutes eingerichtet und ist insbesondere ein Wäschetrockner, z. B. als Einzeltrockner oder in einen Vollwaschtrockner integriert. Dazu weist das Hausgerät einen Prozessluftkanal auf, in dem ein Prozessluftstrom führbar ist, insbesondere mittels eines Prozessluftgebläses. Von dem Prozessluftstrom ist eine Behandlungskammer, z. B. eine Wäschetrommel, mit dem Gut, z. B. einem Wäscheposten, durchströmbar. Das Hausgerät weist zudem eine von der Prozessluft durchströmbare Kühlanordnung zum Abkühlen und Auskondensieren des Prozessluftstroms nach Durchströmen der Behandlungskammer auf, wobei die Kühlanordnung mindestens einen ersten Wärmetauscher, z. B. einen Kondensator, aufweist, durch welchen Wärme aus dem Prozessluftstrom einem Arbeitsfluid, z. B. einem Gas oder einer Flüssigkeit, zuführbar ist. Das Hausgerät weist außerdem eine Heizanordnung zum Erwärmen des Prozessluftstroms vor Durchströmen der Behandlungskammer auf, wobei die Heizanordnung mindestens einen zweiten Wärmetauscher aufweist, durch welchen dem Prozessluftstrom aus dem Arbeitsfluid Wärme zuführbar ist.

Das Arbeitsfluid wird in einer Wärmepumpe geführt, die nach einem regenerativen Gaskreisprozess arbeitet, welcher einen Vuilleumier-Gaskreisprozess umfasst. Ferner liegt am ersten Wärmetauscher eine Wandtemperatur einer Trennwand zwischen einem Prozessluftbereich (in dem Prozessluft geführt wird) und einem Arbeitsfluidbereich (in dem Arbeitsfluid geführt wird) zumindest im Bereich eines Prozesslufteinlasses zwischen 50°C und 80°C, insbesondere bei ca. 70°C, und am zweiten Wärmetauscher eine Wandtemperatur einer Trennwand zwischen einem Prozessluftbereich und einem Arbeitsfluidbereich zumindest im Bereich eines Prozesslufteinlasses zwischen 90°C und 140°C, insbesondere zwischen 110°C und 130°C, liegt. Außerdem weist ein heißes Arbeitsvolumen der Wärmepumpe ein Temperaturniveau von über 500°C auf.

Eine solche Ausgestaltung des Wärmetauschers ermöglicht einen besonders effektiven Wärmeaustausch zwischen Arbeitsfluid und Prozessluft und damit eine Wärmepumpe mit hoher Effektivität, die zudem kompakt und bauraumoptimiert angeordnet werden kann.

Erfindungsgemäß umfasst der regenerative Gaskreisprozess einen Vuilleumier-Gaskreisprozess. Das Arbeitsfluid ist dann ein Gas, bevorzugt Helium. Dabei kann der Vuilleumier-Gaskreisprozess als ein reiner Vuilleumier-Gaskreisprozess ausgelegt sein oder als ein kombinierter Vuilleumier-Gaskreisprozess, z. B. ein Vuilleumier-Gaskreisprozess, der mit einem Stirling-Gaskreisprozess kombiniert ist.

Es wird insbesondere ein Hausgerät bevorzugt, bei dem:
- mindestens einer der Wärmetauscher, vorzugsweise alle Wärmetauscher, arbeitsfluidseitig 250 bis 1500 Kanäle zur Durchleitung des Arbeitsfluids aufweisen, insbesondere 500 bis 1000 Kanäle,
- die arbeitsfluidseitigen Kanäle jeweils eine Länge zwischen 100 mm und 150 mm und / oder einen jeweiligen Durchmesser zwischen 1,5 mm und 2,5 mm, aufweisen,
- eine Prozessluftseite, insbesondere deren Lamellen, mindestens eines Wärmetauschers so ausgelegt ist, dass Strömungsverluste der Prozessluft in den Wärmetauschern im Arbeitspunkt insgesamt weniger als 250 Pa betragen,
- ein Prozessluft-Volumenstrom von 180 bis 230 m³/h erzeugbar ist,
- eine Eintrittstemperatur in die Behandlungskammer von weniger als 120°C und eine Austrittstemperatur aus der Behandlungskammer von 65°C bis 85°C, insbesondere von ca. 75°C, vorliegt,
- die Wärmepumpe mindestens zwei Verdrängerkolben aufweist, deren Kolbendurchmesser zwischen 75 mm und 200 mm, insbesondere zwischen 100 mm und 150 mm, beträgt,
- die Wärmepumpe mindestens zwei Verdrängerkolben aufweist, deren Kolbenhub der zwischen 25 mm und 75 mm, insbesondere zwischen 30 mm und 50 mm, beträgt,
- die Wärmepumpe mindestens zwei Verdrängerkolben aufweist, deren Mitteldruck zwischen 20 bar und 75 bar, insbesondere zwischen 30 bar und 50 bar, beträgt,
- die Wärmepumpe mindestens zwei Verdrängerkolben aufweist, deren Hubfrequenz jeweils zwischen 10 Hz und 15 Hz beträgt,
- die Wärmepumpe mindestens zwei Regeneratoren aufweist, welche jeweils einen Durchmesser zwischen 80 mm und 140 mm aufweisen, wobei insbesondere ein erster, kalter Regenerator eine Länge zwischen 20 mm und 60 mm aufweist, insbesondere zwischen 30 mm und 50 mm, und / oder Fasern eines ersten, kalten Regenerators einen Durchmesser zwischen 30 µm und 80 µm, speziell zwischen 40 µm und 70 µm, aufweisen und / oder ein zweiter, warmer Regenerator eine Länge zwischen 60 mm und 150 mm aufweist, insbesondere zwischen 80 mm und 120 mm aufweisen und / oder Fasern eines zweiten, warmen Regenerators einen Durchmesser zwischen 30 µm und 120 µm, speziell zwischen 50 µm und 100 µm, aufweisen, und / oder
- die Wärmepumpe mindestens zwei Verdrängerkolben aufweist, die als Teil eines Freikolben-Schwingsystems ausgebildet sind, wobei insbesondere die Verdrängerkolben über ein Federelement gekoppelt sind, das eine Federkonstante zwischen 3 N/mm und 15 N/mm, insbesondere zwischen 6 N/mm und 7 N/mm, aufweist und / oder ein erster, kalter Verdrängerkolben ein Gewicht zwischen 3 Kg und 6 Kg, insbesondere zwischen 4 Kg und 5 Kg, aufweist, und / oder ein
   zweiter, heißer Verdrängerkolben ein Gewicht zwischen 1 Kg und 2 Kg aufweist, und / oder ein erster, kalter Verdrängerkolben eine Aussparung zur zumindest teilweisen Aufnahme eines in einem Arbeitsvolumen ortfest angeordneten Körpers aufweist, wobei der Körper in Abhängigkeit von einem Hub des kalten Verdrängerkolbens in die Aussparung eintaucht, wobei der Körper insbesondere eine zylindrische Grundform aufweist, insbesondere mit einem Durchmesser zwischen 25 mm und 75 mm, speziell zwischen 40 mm und 50 mm.

Es wird zur Erhöhung einer Kondensationsrate weiter bevorzugt, dass das Hausgerät einen Zusatzwärmetauscher aufweist, insbesondere zwischen den Wärmetauschern der Wärmepumpe oder vor der Wärmepumpe.

Ein Trockner als Hausgerät weist z. B. einen Prozessluftkreislauf auf, der gebildet wird durch die Trommel mit Wäsche, der Wärmepumpe und einem ProzessluftGebläse. Die Vuilleumier-Wärmepumpe arbeitet nach dem Prinzip eines thermisch angetriebenen regenerativen Gas-Kreisprozesses ähnlich dem Stirling-Prozess. Sie weist in ihrer Reinform ein konstantes Gasvolumen auf, welches durch mindestens zwei mechanisch gekoppelte, linear angetriebene oder freischwingende Verdrängerkolben in drei periodisch veränderliche Teilvolumina mit unterschiedlichen Temperaturniveaus unterteilt wird. Die Volumina sind über zwei Regeneratoren miteinander verbunden. Durch die Beheizung des heißen Arbeitsvolumens (z. B. elektrisch oder mit Gas) entstehen so zwei weitere Temperaturniveaus, die zur Auskopplung der Kondensationswärme aus dem Trocknungsprozess und zur Wiedereinkopplung auf dem höheren Temperaturniveau genutzt werden können. Diese beiden Arbeitsvolumina stehen zu diesem Zweck über Wärmetauscher mit der Prozessluft im Kontakt.

In den folgenden Figuren wird die Erfindung schematisch genauer erläutert. Gleiche oder gleichwirkende Elemente sind in den Figuren mit gleichen Bezugszeichen versehen worden.
- FIG 1: zeigt eine Skizze eines Hausgeräts mit einer Vuilleumier-Wärmepumpe gemäß einer ersten Ausführungsform;
- FIG 2: zeigt eine Prinzipskizze von drei Bauformen einer Vuilleumier-Wärmepumpe mit über ein Koppelgetriebe mechanisch gekoppelten Kolben nach H.-D. Kühl;
- FIG 3: zeigt eine Skizze eines Hausgeräts mit einer Vuilleumier-Wärmepumpe gemäß einer zweiten Ausführungsform;
- FIG 4: zeigt in Aufsicht eine Vuilleumier-Wärmepumpe nach der in FIG 3 gezeigten Ausführungsform für einen Wäschetrockner;
- FIG 5: zeigt in Schrägansicht die Vuilleumier-Wärmepumpe aus FIG 4.

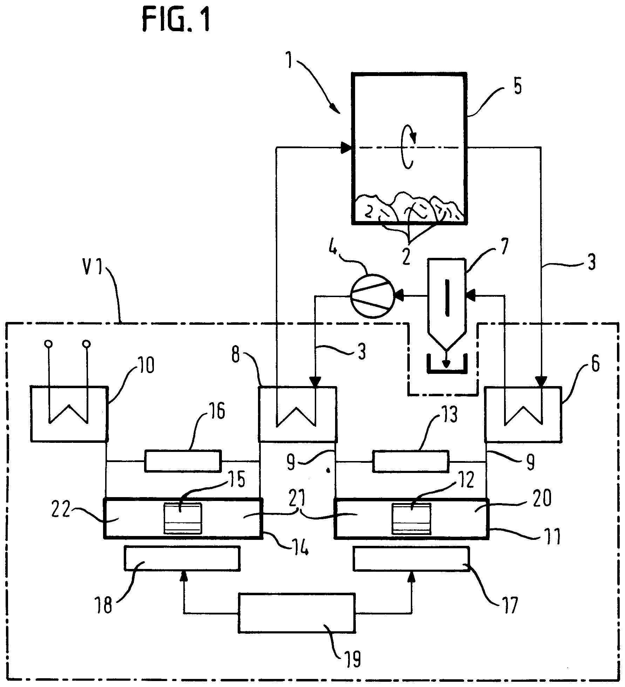

FIG 1 zeigt ein Hausgerät 1 in Form eines Wäschetrockners 1 zum Trocknen eines feuchten Wäschepostens 2. Der Wäschetrockner 1 weist einen im Wesentlichen geschlossenen Prozessluftkanal 3 auf, in welchem ein Prozessluftstrom geführt wird. Dazu wird der Prozessluftstrom von einem Gebläse 4 angetrieben. Der Wäscheposten 2 ist in einer Behandlungskammer in Form einer drehbaren Wäschetrommel 5 angeordnet. Nachdem der Prozessluftstrom die Trommel 5 durchsetzt hat, gelangt er im Prozessluftkanal 3 zu einem ersten Wärmetauscher 6, welcher als Kondensator 6 dient. Darin wird der Prozessluftstrom soweit abgekühlt, dass Feuchtigkeit, welche die Prozessluft in der Trommel 5 vom Wäscheposten 2 aufgenommen hat, auskondensiert. Ein dem Kondensator 6 nachgeordneter Feuchtigkeitsabscheider 7 dient zum Abscheiden der auskondensierten Feuchtigkeit. Abgeschiedene Feuchtigkeit wird gesammelt und entsorgt. Es entspricht herkömmlicher Praxis, den Kondensator 6 und den Feuchtigkeitsabscheider 7 in einem Bauteil zusammenzufassen; in den vorliegenden Figuren sind diese Komponenten vor allem der Klarheit halber separat gezeichnet. Hinter dem Kondensator 6 und dem Feuchtigkeitsabscheider 7 befindet sich im Prozessluftkanal 3 das Gebläse 4, auf welches im Prozessluftkanal 3 ein zweiter Wärmetauscher 8 folgt, welcher als Heizer 8 für den Prozessluftstrom ausgebildet ist. Nachdem der Prozessluftstrom den zweiten Wärmetauscher 8 durchlaufen hat und dabei erwärmt wurde, gelangt er zurück in die Trommel 5, wo er aus der feuchten Wäsche 2 erneut Feuchtigkeit aufnehmen kann.

Der erste Wärmetauscher 6 und der zweite Wärmetauscher 8 sind hier Bestandteile einer Vuilleumier-Wärmepumpe V1 bzw. 6, 8 bis 19; Grundsätze und Ausführungsbeispiele solcher Vuilleumier-Wärmepumpen (wie auch anderer Wärmepumpen mit regenerativen Gaskreisprozessen) sind insbesondere der Schrift von H.-D. Kühl entnehmbar, auf die weiter unten erneut Bezug genommen wird.

Die Vuilleumier-Wärmepumpe V1 bzw. 6, 8 bis 19 wird nachfolgend im Einzelnen beschrieben. Sie umfasst einen Arbeitsgaskanal 9, in welchem ein geeignetes und bei den gegebenen Temperaturen möglichst weitgehend einem idealen Gas entsprechendes Arbeitsgas, hier: Helium, als Kältemittel eingeschlossen ist. Der Arbeitsgaskanal 9 durchströmt den ersten ('kalten') Wärmetauscher bzw. Kondensator 6, welcher auf einem niedrigen Temperaturniveau als Wärmesenke fungiert, wobei und indem er aus dem Prozessluftstrom im Prozessluftkanal 3 Wärme wie beschrieben aufnimmt. Im Inneren des Arbeitsgaskanals 9 befindet sich der zweite ('warme') Wärmetauscher 8, welcher auf einem mittleren Temperaturniveau als Wärmequelle fungiert, wobei und indem er in beschriebener Weise dem Luftstrom im Prozessluftkanal 3 Wärme zuführt. An einem zweiten Ende des Arbeitsgaskanals 9 befindet sich ein Heizer 10, welcher elektrisch betrieben wird und das zu ihm gelangte Arbeitsgas auf ein hohes Temperaturniveau aufheizt. Die derart in das Arbeitsgas hinein gelangende Wärme ist diejenige Energie, welche den regenerativen Vuilleumier-Arbeitsgaskreisprozess in dem Arbeitsgaskanal 9 antreibt.

Zwischen dem ersten Wärmetauscher 6 und dem zweiten Wärmetauscher 8 weist der Arbeitsgaskanal 9 einen ersten Zylinder 11 auf, in welchem ein erster Kolben 12 beweglich ist. Parallel geschaltet zu dem ersten Zylinder 11 ist ein erster Regenerator 13, welcher ein von dem Arbeitsgas weitgehend frei durchströmbarer erster Wärmespeicher 13 ist. Indem der erste Kolben 12 bewegt wird, wird das Arbeitsgas durch den ersten Regenerator 13 hindurchgedrückt und kann so von dem ersten Wärmetauscher 6 zum zweiten Wärmetauscher 8 oder zurück transportiert werden. Dabei gibt es eventuelle überschüssige Wärme an den ersten Regenerator 13 ab oder nimmt eventuell fehlende Wärme aus diesem auf, und zwar je nachdem, in welcher Richtung es den ersten Regenerator 13 durchströmt. Das an den ersten Wärmetauscher (Kondensator) 6 angeschlossene Arbeitsvolumen 20 wird auch als "kaltes" Arbeitsvolumen bezeichnet; das an den zweiten Wärmetauscher (Wärmequelle) 8 angeschlossene Arbeitsvolumen 21 wird entsprechend als "warmes" Arbeitsvolumen bezeichnet.

Zwischen dem zweiten Wärmetauscher 8 und dem Heizer 10 weist der Arbeitsgaskanal 9 einen zweiten Zylinder 14 mit darin beweglichem zweitem Kolben 15 sowie, wiederum parallel geschaltet zu dem zweiten Zylinder 14, einen zweiten Regenerator 16 auf. Durch Verschieben des zweiten Kolbens 15 wird Arbeitsgas durch den Regenerator 16 vom dem zweiten Wärmetauscher 8 zum Heizer 10 oder zurück transportiert, wobei es wiederum überschüssige Wärme abgibt oder fehlende Wärme aufnimmt. Das an den ersten Wärmetauscher (Kondensator) 6 angeschlossene Arbeitsvolumen 21 wird auch hier als "warmes" Arbeitsvolumen bezeichnet; das an den Heizer 10 angeschlossene Arbeitsvolumen 21 wird als "heißes" Arbeitsvolumen bezeichnet.

Zum Betreiben des Vuilleumier-Prozesses mit dem Arbeitsgas werden periodische, aufeinander abgestimmte und in wohlbestimmter Phasenbeziehung zueinander stehende Bewegungen des ersten Kolbens 12 und des zweiten Kolbens 15 verwendet. Zu diesem Zweck sind ein erster Linearantrieb 17 für den ersten Kolben 12 und ein zweiter Linearantrieb 18 für den zweiten Kolben 15 vorgesehen, welche durch eine Steuereinrichtung 19 gesteuert werden und die Kolben 12 und 15 berührungslos verschieben. Dies ist insbesondere deshalb in günstiger Weise möglich, weil der Vuilleumier-Prozess ausschließlich mit der vom Heizer 10 gelieferten Wärmeenergie betrieben wird und das Einbringen mechanischer Energie über die Kolben 12 und 15 nur insoweit erforderlich ist, als das Arbeitsgas zwischen dem ersten Wärmetauscher 6, dem zweiten Wärmetauscher 8 und dem Heizer 10 hin und her befördert werden muss. Dabei müssen mehr oder weniger nur Trägheits- und Reibungskräfte des strömenden Arbeitsgases sowie der sich bewegenden Kolben 12 und 15 überwunden werden. Insbesondere ist es nicht erforderlich, dass die Linearantriebe 17 und 18 die Kolben 12 und 15 einander berühren; vielmehr ist es tatsächlich möglich, die Kolben 12 und 15 berührungsfrei durch die Linearantriebe 17 und 18 zu führen. Entsprechend ist es nicht erforderlich, bewegte Komponenten in gedichteter Weise aus dem Arbeitsgaskanal 9 herauszuführen; der Arbeitsgaskanal 9 bildet vielmehr eine in sich vollkommen geschlossene und insoweit starre Einheit, die dementsprechend einfach, zuverlässig und dauerhaft gedichtet werden kann - auch dann, wenn das Arbeitsgas unter einem Druck bis zu mehreren 100 bar steht. Für die Betriebssicherheit und auch die Langlebigkeit des Hausgerätes 1 ist dies von hoher Bedeutung.

Der Betrieb der Wärmepumpe V1 bei einem typischen Trocknungsprozess, für welchen eine Zeit in der Größenordnung einer Stunde anzusetzen wäre, erfolgt durch wiederholtes Verschieben des Arbeitsgases innerhalb des Arbeitsgaskanals 9, wobei die Kolben 12 und 15 zyklisch und zueinander phasenverschoben mit einer Periode in der Größenordnung einer Zehntelsekunde bewegt werden. Ein bevorzugtes Verhältnis zwischen der Dauer des Trocknungsprozesses und der Dauer der Periode des regenerativen Gasprozesses liegt damit zwischen 10.000 und 100.000, besonders bevorzugt zwischen 30.000 und 40.000.

Falls die Dimensionierung der Wärmepumpe V1 mit ihrer Kolbenfrequenz nur auf einen stationären Betrieb des Trockners mit voller Beladung ausgelegt ist, kann das Erreichen der stationären Phase oder die Trocknung bei Unterbeladung problematisch sein. Um dies zu vermeiden, werden hier Reibungsverluste mittels einer Frequenzanpassung des (frequenzgeregelten) Linearantriebs ausgeglichen, so dass eine effiziente Anpassung des Arbeitspunktes an den Betriebszustand des Trockners 1 möglich ist.

Dieses Hausgerät 1 bietet mit dem Einsatz eines regenerativen Gaskreisprozesses die Möglichkeit der Verwendung eines unter Funktions- und Sicherheitsaspekten unkritischen Arbeitsmittels. Außerdem können in der entsprechenden Wärmepumpe hohe Wärmepumpfaktoren bei niedrigen Temperaturniveaus erreicht werden. Mit der Vuilleumier-Wärmepumpe kann bei einer möglichst hohen Temperaturdifferenz zwischen dem hohen und dem niedrigen Temperaturniveaus sowie einer vergleichsweise geringen Temperaturdifferenz zwischen den mittleren und dem niedrigen Temperaturniveaus eine hohe Leistungszahl der Wärmepumpe erreicht werden. Damit besteht die Möglichkeit, ein Hausgerät in Form eines Wäschetrockners zu schaffen, welchem eine Energieeffizienzklasse A zugeordnet werden kann.

Entsprechende Kriterien können berücksichtigt werden durch die Wahl des Arbeitsgases und des Drucks, mit welchem dieses in der Wärmepumpe vorliegen muss. Auch die Gestaltung der Wärmespeicher in der Wärmepumpe kann deren betriebliche Eigenschaften günstig beeinflussen.

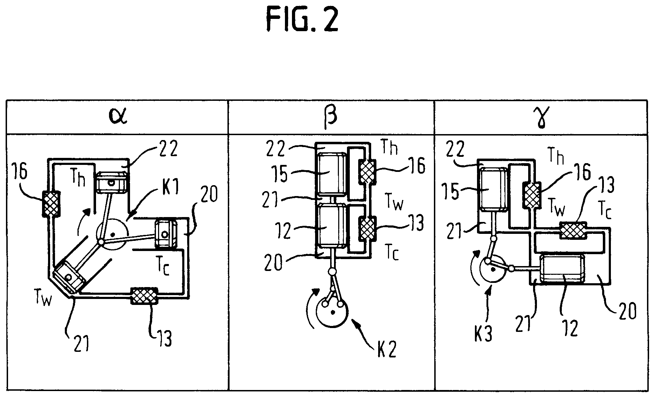

FIG 2 zeigt eine Prinzipskizze von drei Bauformen einer Vuilleumier-Wärmepumpe nach H.-D. Kühl, Seite 23. Dabei sind die Kolben über ein gemeinsames Koppelgetriebe mechanisch miteinander verbunden.

Bei der in der Praxis nicht um Vordergrund stehenden α-Bauform sind drei Kolben sternförmig über ein Koppelgetriebe K1 mechanisch miteinander verbunden, welches eine Koppelstange je Kolben an einer drehbaren Scheibe zusammenführt. Durch das Koppelgetriebe K wird eine Phasenbeziehung der Kolben untereinander festgelegt.

Bei der β-Bauform sind zwei Kolben 12, 15 in einem gemeinsamen Zylinder hintereinander geschaltet und stehen über ein externes Koppelgetriebe K2 in einer festen Phasenbeziehung von 90° zueinander.

Bei der γ-Bauform sind die zwei Kolben 12, 15 zueinander angewinkelt angeordnet und laufen in eigenen Zylindern.

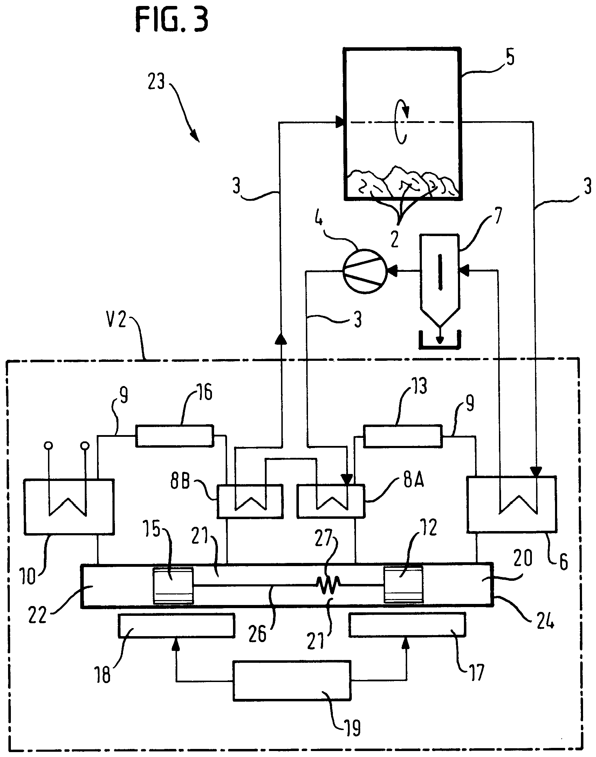

FIG 3 zeigt als Skizze eine weitere alternative Ausführungsform einer Vuilleumier-Wärmepumpe V2 für einen Wäschetrockner. Der Wäschetrockner 23 ist zur Erreichung einer Entfeuchtungsleistung von etwa 40 g Wasser pro Minute ausgelegt. Dazu ist ein Prozessluft-Volumenstrom von 180-230 m³/h vorgesehen, der eine Eintrittstemperatur in die Trommel 5 von weniger als 120°C und eine Austrittstemperatur aus der Trommel 5 von ca. 75°C realisiert.

In diesem sind, ähnlich zur β-Bauform aus FIG 2, nun der erste Kolben 12 und der zweite Kolben 15 mechanisch miteinander gekoppelt und laufen hintereinander in einem gemeinsamen Zylinder 24. Im Gegensatz zur β-Bauform aus FIG 2 wird jedoch nun auf ein Koppelgetriebe verzichtet; vielmehr sind die Kolben 12, 15 Teil eines Freikolben-Schwingsystems. Diese Ausführungsform hat sich für einen Wäschetrockner als besonderes vorteilhaft herausgestellt, unter anderem, da so der Bauraum minimiert wird Der erste, 'kalte' Kolben 12 ist speziell so ausgestaltet, dass er eine Masse zwischen 4 kg und 5 kg aufweist, während der 'heiße' Kolben zweite, eine Masse zwischen 1 kg und 1,5 kg aufweist. Die Kolben 12, 15 sind mittels einer Kolbenstange 26 verbunden. In den Lastpfad zwischen den Kolben 12, 15 ist eine Koppelfeder (Schraubendruckfeder) 27 eingebracht, deren Federkonstante hier zwischen 6 N/mm und 7 N/mm beträgt. Bei einer dynamischen Betrachtung der Vuilleumier-Wärmepumpe bilden beispielsweise die Arbeitsgasvolumina zusammen mit den weiter unten genauer beschriebenen Kolbenstangen weitere, dynamische Federelemente ('Gasfedern') aus.

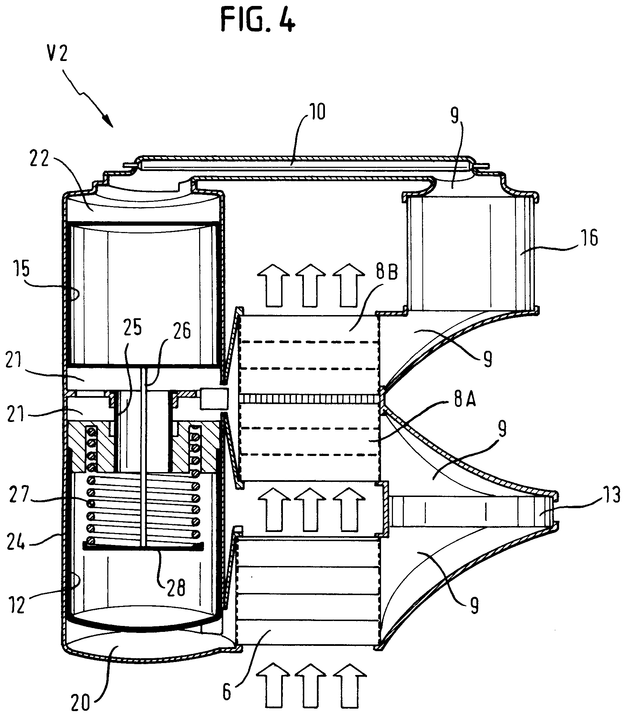

Die in FIG 1 noch getrennten warmen Arbeitsvolumina sind nun in einem einzigen warmen Arbeitsvolumen 21 zusammengeführt. Bei einem Kolbendurchmesser der Kolben 12, 15 zwischen 100 mm und 150 mm, einem Hub der Kolben 12, 15 zwischen 30 mm und 50 mm und einem Mitteldruck von ca. 30 bar bis 50 bar ergeben sich Kolbenfrequenzen der Kolben 12,15 von ca. 10 Hz bis 15 Hz. Diese Frequenzen sind für den Betriebsbereich des Wäschetrockners im wesentlichen konstant, jedoch kann sich der Kolbenhub erheblich ändern, wie weiter unten für FIG 4 genauer ausgeführt wird.

Ferner ist der zweite Wärmetauscher (Prozessluftheizer) nun in Form zweier Teil-Wärmetauscher 8A und 8B ausgeführt. Die heliumseitigen Kanäle der Aluminium-Wärmetauscher 6, 8A und 8B weisen eine Länge zwischen 100 mm und 150 mm für einen einzelnen Kanal auf. Für den kalten Wärmetauscher 6 und die beiden warmen Wärmetauscher 8A und 8B sind dann, abhängig vom Durchmesser eines einzelnen Kanals zwischen hier 1,5 mm und 2,5 mm, je 500 bis 1000 Kanäle vorgesehen. Die luftseitigen Lamellen der Wärmetauscher 6, 8A bzw. 8B sind für die notwendigen Übertragungsleistungen so ausgelegt, dass die Strömungsverluste aufgrund der Wärmetauscher 6, 8A bzw. 8B kleiner als 250 Pa bleiben.

Die Regeneratoren 13, 16 sind hier so ausgelegt, dass eine Länge des kalte Regenerators 13 - bei einem Durchmesser von 80 mm bis 150 mm - 30 mm bis 50 mm nicht überschreitet (unter Annahme eines Faserdurchmessers von 40 µm bis 70 µm) und der warme Regenerator 16 eine Länge von 80 mm bis 120 mm (bei einem Faserdurchmesser von 50 µm bis 100 µm) nicht übersteigt.

Das heiße Volumen 22 der Wärmepumpe V2 liegt hier auf einem Temperaturniveau von über 500°C. Am Kondensator 6 liegen beim normalen Betrieb prozesslufteinlassseitig Wandtemperaturen einer Aluminiumtrennwand zwischen einem Prozessluftbereich und einem Arbeitsgasbereich von 70°C an, am ersten Teil-Heizer bzw. Teil-Wärmetauscher 8A entsprechende Wandtemperaturen von 110°C bis 120°C und am zweiten Teil-Heizer bzw. Teil-Wärmetauscher 8B von 120°C bis 130°C.

Der Antrieb 17,18,19 dient nur dazu, das System in seinen Betriebszustand hochzufahren und ggf. Reibungsverluste auszugleichen. Jedoch kann, insbesondere bei ausreichend geringen Reibungsverlusten, auch auf den Antrieb verzichtet werden.

FIG 4 zeigt in Aufsicht eine mögliche Implementierung der Wärmepumpe V2 aus FIG 3. Die mechanische Verbindung zwischen den Kolben 12, 15 ist im einzelnen so ausgestaltet, dass die am 'heißen' Kolben 15 befestigte Kolbenstange 26 in den kalten Kolben 12 reicht und dort in einem Tellersitz bzw. Deckel 28 endet. Auf dem Tellersitz 28 sitzt die als Schraubendruckfeder ausgestaltete Koppelfeder 27, welche an ihrer gegenüberliegenden Seite an einer Stirnseite des kalten Kolbens 12 innenliegend aufsitzt.

Diese Ausgestaltung des Freikolben-Schwingsystems, insbesondere mit hoher Masse des kalten Kolbens 12 (hier: 4 kg bis 5 kg) und geringerer Masse des heißen Kolbens 15 (hier: 1 kg bis 1,5 kg), ergibt den überraschenden Effekt, dass eine Trockenleistung vorteilhafterweise besonders wirksam an einen Trocknungsgrad und / oder Beladungsgrad anpassbar ist. Denn die Temperaturdifferenz zwischen kaltem Arbeitsvolumen 20 und warmen Arbeitsvolumen 21 vergrößert sich mit niedrigerer Beladung und steigendem Trocknungsgrad. Es wird nun erreicht, dass der Kolbenhub sich verkleinert, so dass sich auch die Trocknungsleistung der Wärmepumpe verringert. Dies steht im direkten Widerspruch zum gewünschten bisherigen Verhalten bekannter Vuilleumier-Anwendungen, wie z. B. im Heizungsbau, bei denen bei höherer Temperaturdifferenz auch eine höhere Wärmepumpenleistung angestrebt wird.

An einer Wand des Zylinders 24 im Bereich des warmen Arbeitsvolumens 21 ist ein Volumenelement in Form eines sog. Arbeitszylinders 25 stationär befestigt. Der Arbeitszylinder 25 taucht, je nach Lage des kalten Verdrängerkolbens 12, mehr oder weniger in den kalten Verdrängerkolben 12 ein. Dazu weist der kalte Verdrängerkolben 12 eine entsprechende Ausnehmung auf (ohne Bezugszeichen), in welcher der Arbeitszylinder 25 dicht (d. h., ohne oder mit nur geringer bzw. vernachlässigbarer Spaltleckage) geführt wird. Bei einer Hubbewegung des kalten Verdrängerkolbens 12 ändert sich dadurch das für den Vuilleumier-Prozess zur Verfügung stehende Arbeitsvolumen entsprechend. Folglich wird (p,V)-Arbeit geleistet, welche dazu dient, Reibungsverluste der Vuilleumier-Wärmepumpe auszugleichen. Zum Erhalt der Gesamtenergiebilanz muss der Heizer, der hier in Form eines im Arbeitsgaskanal angeordneten Heizstabs 10 vorliegt, stärker geheizt werden als bei einem verlustfreien Vuilleumier-Prozess. Die Verwendung eines Heizers 10 beim Vuilleumier-Prozess erscheint zunächst aufgrund der Umwandlungsverluste von Strom in Wärmeenergie nachteiliger als ein direkter elektrisch-mechanischer Antrieb, wie er z. B. für einen Stirlingmotor verwendet wird. Jedoch ist die Verwendung eines Heizstabs 10 weitaus preiswerter und verlässlicher als ein Antriebsmotor mit dem dazu benötigten Getriebe und wirft auch keine Wärmeverluste auf.

Der Durchmesser des Arbeitszylinders 25 liegt zwischen 40 mm und 50 mm. Die Kolbenstange 26 wird durch den Arbeitszylinder 25 geführt. Der Arbeitskörper 25 kann im volumetrischen Sinne auch als Kolbenstange 25 des kalten Verdrängerkolbens 12 verstanden werden.

Seitlich zum Zylinder 24 versetzt sind die Wärmetauscher 6, 8A, 8B in einer für die Prozessluft geraden Linie (linear) hintereinander angeordnet. Die Wärmetauscher 6, 8A, 8B sind also bezüglich der Verdrängerkolben 12, 15 asymmetrisch (einseitig) angeordnet. Die Führung der Prozessluft ist durch die Pfeile angedeutet, wobei die aus der Trommel austretende feuchtwarme Prozessluft zunächst zur Auskondensation durch den Kondensator 6 und danach zur Erwärmung durch die beiden Teil-Wärmetauscher 8A und 8B geführt wird. Die Regeneratoren 13, 16 liegen kollinear zueinander noch weiter seitlich versetzt. Die Lage des Zylinders 24, der Wärmetauscher 6, 8A, 8B und der Regeneratoren ist somit im Wesentlichen koplanar. Durch diese Prozessluftführung lässt sich ein luftwiderstandsreduziertes und bauraumoptimiertes Strömungsverhalten erreichen. Eine grundsätzlich koplanare Bauweise ist auch bei nicht-linearer, z. B. achsenparalleler oder angewinkelter, Anordnung der Kolben 12, 15, der Wärmetauscher 6, 8A, 8B und / oder der Regeneratoren 13, 16 vorteilhaft. Die gezeigte Bauform unterscheidet sich erheblich von bekannten Bauformen, z. B. aus dem Heizungsbau, bei denen Flüssigkeits/Flüssigkeits-Wärmetauscher üblicherweise um die Arbeitsvolumina herum, und diese somit umgebend, gelegt werden.

Eine Einstellung einer Phasenverschiebung der Kolben 12, 15 von ca. 90° kann mittels, unter anderem, einer Dimensionierung von Federkonstanten des Systems (mechanische Feder 27 oder Gasfeder) und der Querschnitte der Kolbenstangen 25,26 erreicht werden. Dabei können Verluste mitberücksichtigt werden.

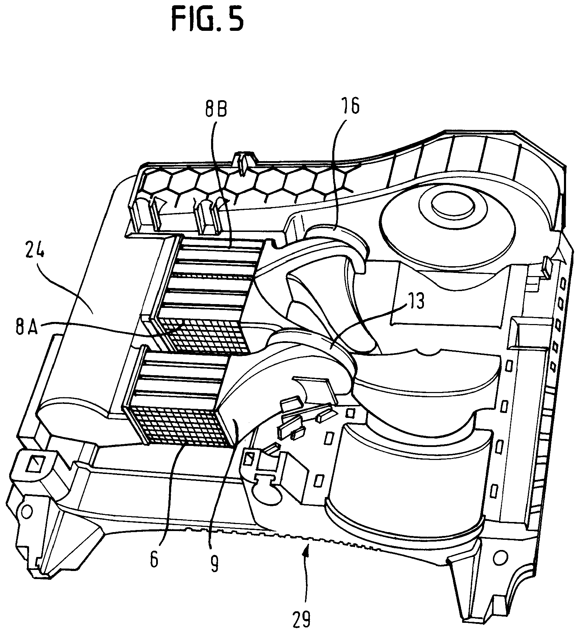

FIG 5 zeigt eine Bodengruppe 29 für einen Wäschetrockner nach dem in FIG 3 und FIG 4 dargestellten Vuilleumier-Aufbau. Die Bodengruppe 29 zeigt den Kondensator 6, die beiden Teil-Wärmetauscher 8A und 8B, einen Teil des Arbeitsgaskanals 9, den ersten Regenerator 13 und den zweiten Regenerator 16 und den Zylinder 14. Die gezeigte Wärmepumpe mit Freikolben-Schwingsystem ist bauraumminimiert und nicht größer als 450 x 450 mm.

Bei dieser bauraumgerechten Dimensionierung der Wärmepumpe ist mit ca. 800 W bis 1000 W Wärmerückgewinnung eine Heizleistung zwischen ca. 2000 W bis 2500 W für die angestrebte Entfeuchtung realisierbar. Mit dieser Kondensationsleistung wird ein Trocknungsprozess der Energieeffizienzklasse A erreicht; jedoch wird für die Erfüllung der Kondensationsrate ein (nicht dargestellter) Zusatzwärmetauscher verwendet. Da die Kühlleistung des Zusatzwärmetauschers kleiner als 800 W ist, kann er sehr klein sein und beispielsweise zusätzlich in der Bodengruppe oder auch im Türbereich angeordnet sein. Als Zusatzwärmetauscher sind jegliche bekannte geeignete Bauformen von Wärmetauschern einsetzbar. Der Zusatzwärmetauscher kann beispielsweise zwischen dem kalten Wärmetauscher und dem warmen Wärmetauscher angeordnet sein. Er kann aber auch im Prozessluftkanal nach der Trommel und vor der Wärmepumpe angeordnet sein und dann beispielsweise auch als Flusenfalle wirken.

Bei dem beschriebenen Wärmepumpentrockner ist z. B. Helium als natürliches, umweltneutrales, nicht brennbares und nicht toxisches Arbeitsgas einsetzbar. Er erreicht die gleiche Entfeuchtungsleistung wie ein bekannter Kondensationstrockner unter Einhaltung der Energieeffizienzklasse A.

Selbstverständlich ist die vorliegende Erfindung nicht auf die gezeigten Ausführungsformen beschränkt.

So ist statt eines Freikolben-Schwingsystems eine Verwendung eines Koppelgetriebes möglich, z. B. nach den in FIG 2 gezeigten α-, β- oder γ-Grundformen mit einem gemeinsamen Koppelgetriebe K1, K2 bzw. K3. Die Koppelgetriebe können dabei extern zu den Kolbenzylindern angeordnet sein oder im Arbeitsgasvolumen. So ist eine angewinkelte Anordnung der Kolben, insbesondere 90°-Anordnung darstellbar, z. B. mit mittigem Koppelgetriebe.

Eine angewinkelte Anordnung der Kolben macht einerseits die Luftführung mit der Platzierung der Wärmetauscher und Regeneratoren komplizierter, lässt aber den Zusatzwärmetauscher leichter in der Bodengruppe unterbringen.

Falls die Dimensionierung der Wärmepumpe mit ihrer Kolbenfrequenz auf einen stationären Betrieb des Trockners mit voller Beladung ausgelegt ist, kann das Erreichen der stationären Phase oder die Trocknung bei Unterbeladung problematisch sein. Um dies zu vermeiden, werden Reibungsverluste mittels eines drehzahlgeregelten Antriebs des Koppelgetriebes ausgeglichen und die Kolbenfrequenz an einen instationären Betrieb und Teillastbetrieb angepasst. Die Wärmepumpe arbeitet so in unterschiedlichen Betriebszuständen in einem optimalen Arbeitspunkt.

Ferner kann beispielsweise eine weitere Feder (z. B. eine mechanische oder Gasfeder) zur Positionsfestlegung der Kolben im Kolbengehäuse verwendet werden.

Auch kann das Prozessluftgebläse an anderer Stelle im Prozessluftkanal angeordnet sein, z. B. direkt vor Eintritt der Prozessluft in die Trommel oder vor einem Prozessluftheizer.

Auch kann als umweltfreundliches Arbeitsgas statt Helium z. B. Wasserstoff eingesetzt werden.

Das Hausgerät kann z. B. als Einzeltrockner oder Vollwaschtrockner ausgeführt sein, aber auch z. B. als Geschirrspüler vorliegen.

### Bezugszeichenliste

- 1: Hausgerät
- 2: Wäscheposten
- 3: Prozessluftkanal
- 4: Gebläse
- 5: Wäschetrommel
- 6: Erster Wärmetauscher, Kondensator
- 7: Feuchtigkeitsabscheider
- 8: Zweiter Wärmetauscher, Heizer
- 8A: Erster Teil-Heizer
- 8B: Zweiter Teil-Heizer
- 9: Arbeitsgaskanal
- 10: Heizer für Arbeitsgas
- 11: Erster Zylinder
- 12: Erster Kolben
- 13: Erster Wärmespeicher, erster Regenerator
- 14: Zweiter Zylinder
- 15: Zweiter Kolben
- 16: Zweiter Wärmespeicher, zweiter Regenerator
- 17: Erster Linearantrieb
- 18: Zweiter Linearantrieb
- 19: Steuereinrichtung
- 20: Kaltes Arbeitsvolumen
- 21: Warmes Arbeitsvolumen
- 22: Heißes Arbeitsvolumen
- 23: Wäschetrockner
- 24: Zylinder
- 25: Arbeitszylinder
- 26: Verbindungsstange
- 27: Federelement
- 28: Tellersitz
- 29: Bodengruppe
- V1: Vuilleumier-Wärmepumpe
- V2: Vuilleumier-Wärmepumpe

## Patentansprüche

1. Hausgerät (1;23) zum Trocknen eines feuchten Gutes (2) mittels eines in einem Prozessluftkanal (3) führbaren Prozessluftstroms, durch welchen durchströmbar sind:
- eine Behandlungskammer (5) mit dem Gut (2),
- eine Kühlanordnung (6,7) zum Abkühlen und Auskondensieren des Prozessluftstroms (3) nach Durchströmen der Behandlungskammer (5), wobei die Kühlanordnung (6,7) einen ersten Wärmetauscher (6) aufweist, durch welchen Wärme aus dem Prozessluftstrom einem Arbeitsfluid zuführbar ist, und nachgeschaltet
- eine Heizanordnung zum Erwärmen des Prozessluftstroms vor Durchströmen der Behandlungskammer (5), wobei die Heizanordnung (8) einen zweiten Wärmetauscher (8;8A;8B) aufweist, durch welchen dem Prozessluftstrom aus dem Arbeitsfluid Wärme zuführbar ist,
**dadurch gekennzeichnet, dass**
- das Arbeitsfluid in einer Wärmepumpe (V1;V2) geführt wird, die nach einem regenerativen Gaskreisprozess arbeitet, welcher einen Vuilleumier-Gaskreisprozess umfasst,
- am ersten Wärmetauscher (6) eine Wandtemperatur einer Trennwand zwischen einem Prozessluftbereich und einem Arbeitsfluidbereich zumindest im Bereich eines Prozesslufteinlasses zwischen 50°C und 80°C, insbesondere bei ca. 70°C, liegt,
- am zweiten Wärmetauscher (8;8A,8B) eine Wandtemperatur einer Trennwand zwischen einem Prozessluftbereich und einem Arbeitsfluidbereich zumindest im Bereich eines Prozesslufteinlasses zwischen 90°C und 140°C, insbesondere zwischen 110°C und 130°C, liegt, und
- ein heißes Arbeitsvolumen (22) der Wärmepumpe (V1;V2) ein Temperaturniveau von über 500°C aufweist.

2. Hausgerät (1;23) nach Anspruch 1, **dadurch gekennzeichnet, dass** die arbeitsfluidseitigen Kanäle jeweils eine Länge zwischen 100 mm und 150 mm und/oder einen jeweiligen Durchmesser zwischen 1,5 mm und 2,5 mm, aufweisen.

3. Hausgerät (1;23) nach einem der vorhergehenden Ansprüche, **dadurch gekennzeichnet, dass** eine Prozessluftseite, insbesondere deren Lamellen, der Wärmetauscher (6,8A,8B) so ausgelegt ist, dass ein Strömungsverlust der Prozessluft in den Wärmetauschern (6,8A,8B) im Arbeitspunkt weniger als 250 Pa beträgt.

4. Hausgerät (1;23) nach einem der vorhergehenden Ansprüche, **dadurch gekennzeichnet, dass** mindestens einer der Wärmetauscher (6;8A;8B) arbeitsfluidseitig 250 bis 1500 Kanäle zur Durchleitung des Arbeitsfluids, insbesondere 500 bis 1000 Kanäle, aufweist.

5. Hausgerät (1;23) nach einem der vorhergehenden Ansprüche, **dadurch gekennzeichnet, dass** ein Prozessluft-Volumenstrom von 180 bis 230 m³/h erzeugbar ist.

6. Hausgerät (1;23) nach einem der vorhergehenden Ansprüche, **dadurch gekennzeichnet, dass** eine Eintrittstemperatur in die Behandlungskammer (5) von weniger als 120°C und eine Austrittstemperatur aus der Behandlungskammer (5) von 65°C bis 85°C, insbesondere von ca. 75°C, vorliegt.

7. Hausgerät (1;23) nach einem der vorhergehenden Ansprüche, **dadurch gekennzeichnet, dass** die Wärmepumpe (V1;V2) mindestens zwei Verdrängerkolben (12,15) aufweist, deren Kolbendurchmesser zwischen 75 mm und 200 mm, insbesondere zwischen 100 mm und 150 mm, beträgt.

8. Hausgerät (1;23) nach einem der vorhergehenden Ansprüche, **dadurch gekennzeichnet, dass** die Wärmepumpe (V1;V2) mindestens zwei Verdrängerkolben (12,15) aufweist, deren Kolbenhub der zwischen 25 mm und 75 mm, insbesondere zwischen 30 mm und 50 mm, beträgt.

9. Hausgerät (1;23) nach einem der vorhergehenden Ansprüche, **dadurch gekennzeichnet, dass** die Wärmepumpe (V1;V2) mindestens zwei Verdrängerkolben (12,15) aufweist, deren Mitteldruck zwischen 20 bar und 75 bar, insbesondere zwischen 30 bar und 50 bar, beträgt.

10. Hausgerät (1;23) nach einem der vorhergehenden Ansprüche, **dadurch gekennzeichnet, dass** die Wärmepumpe (V1;V2) mindestens zwei Verdrängerkolben (12,15) aufweist, deren Hubfrequenz jeweils zwischen 10 Hz und 15 Hz beträgt.

11. Hausgerät (1;23) nach einem der vorhergehenden Ansprüche, **dadurch gekennzeichnet, dass** die Wärmepumpe (V1;V2) mindestens zwei Regeneratoren (13,16) aufweist, welche jeweils einen Durchmesser zwischen 80 mm und 140 mm aufweisen.

12. Hausgerät (1;23) nach Anspruch 11, **dadurch gekennzeichnet, dass** ein erster, kalter Regenerator (13) eine Länge zwischen 20 mm und 60 mm aufweist, insbesondere zwischen 30 mm und 50 mm aufweisen.

13. Hausgerät (1;23) nach Anspruch 11 oder 12, **dadurch gekennzeichnet, dass** Fasern eines ersten, kalten Regenerators (13) einen Durchmesser zwischen 30 µm und 80 µm, speziell zwischen 40 µm und 70 µm, aufweisen.

14. Hausgerät (1;23) nach einem der Ansprüche 11 bis 13, **dadurch gekennzeichnet, dass** ein zweiter, warmer Regenerator (16) eine Länge zwischen 60 mm und 150 mm aufweist, insbesondere zwischen 80 mm und 120 mm aufweisen.

15. Hausgerät (1;23) nach einem der Ansprüche 11 bis 14, **dadurch gekennzeichnet, dass** Fasern eines zweiten, warmen Regenerators (16) einen Durchmesser zwischen 30 µm und 120 µm, speziell zwischen 50 µm und 100 µm, aufweisen.

16. Hausgerät (1;23) nach Anspruch 1 oder 2, **dadurch gekennzeichnet, dass** die Wärmepumpe (V1;V2) mindestens zwei Verdrängerkolben (12,15) aufweist, die als Teil eines Freikolben-Schwingsystems ausgebildet sind.

17. Hausgerät (1;23) nach Anspruch 16, **dadurch gekennzeichnet, dass** die Verdrängerkolben (12,15) über ein Federelement (27) gekoppelt sind, das eine Federkonstante zwischen 3 N/mm und 15 N/mm, insbesondere zwischen 6 N/mm und 7 N/mm, aufweist.

18. Hausgerät (1;23) nach einem der Ansprüche 16 oder 17, **dadurch gekennzeichnet, dass** ein erster, kalter Verdrängerkolben (12) ein Gewicht zwischen 3 Kg und 6 Kg, insbesondere zwischen 4 Kg und 5 Kg, aufweist.

19. Hausgerät (1;23) nach einem der Ansprüche 16 bis 18, **dadurch gekennzeichnet, dass** ein zweiter, heißer Verdrängerkolben (15) ein Gewicht zwischen 1 Kg und 2 Kg aufweist.

20. Hausgerät (1;23) nach einem der Ansprüche 16 bis 19, **dadurch gekennzeichnet, dass** ein erster, kalter Verdrängerkolben (12) eine Aussparung zur zumindest teilweisen Aufnahme eines in einem Arbeitsvolumen (21) ortfest angeordneten Körpers (25) aufweist, wobei der Körper (25) in Abhängigkeit von einem Hub des kalten Verdrängerkolbens (12) in die Aussparung eintaucht.

21. Hausgerät (1;23) nach Anspruch 20, **dadurch gekennzeichnet, dass** der Körper (25) eine zylindrische Grundform aufweist, insbesondere mit einem Durchmesser zwischen 25 mm und 75 mm, speziell zwischen 40 mm und 50 mm.

22. Hausgerät nach einem der vorhergehenden Ansprüche, **dadurch gekennzeichnet, dass** es einen Zusatzwärmetauscher aufweist.

## Claims

1. Domestic appliance (1; 23) for drying a damp product (2) by means of a process air stream that can be conducted in a process air channel (3), said stream flowing through
- a treatment chamber (5) comprising the product (2),
- a cooling assembly (6, 7) for cooling and condensing the process air stream (3) once the latter has passed through the treatment chamber (5), the cooling assembly (6, 7) having a first heat exchanger (6), by means of which heat from the process air stream can be supplied to a working fluid, and connected downstream
- a heating assembly for heating the process air stream before the latter flows through the treatment chamber (5), said heating assembly (8) having a second heat exchanger (8;8A;8B), by means of which heat from the working fluid can be supplied to the process air stream,
**characterised in that**
- the working fluid is conducted in a heat pump (V1;V2), which operates according to a regenerative gas cycle process, which comprises a Vuilleumier gas cycle process,
- in the first heat exchanger (6), a wall temperature of a partition between a process air region and a working fluid region, at least in the vicinity of a process air inlet, lies between 50°C and 80°C, in particular at approximately 70°C,
- in the second heat exchanger (8;8A,8B), a wall temperature of a partition between a process air region and a working fluid region, at least in the vicinity of a process air inlet, lies between 90°C and 140°C, in particular between 110°C and 130°C, and
- a hot working volume (22) of the heat pump (V1;V2) has a temperature level of above 500°C.

2. Domestic appliance (1;23) according to claim 1, **characterised in that** the working fluid-side channels each have a length between 100 mm and 150 mm and/or a respective diameter between 1.5 mm and 2.5 mm.

3. Domestic appliance (1;23) according to one of the preceding claims, **characterised in that** one process air side, and in particular its lamellae, of the heat exchangers (6,8A,8B) is configured in such a way that a loss of flow in the process air in the heat exchangers (6,8A,8B) is less than 250 Pa at the working point.

4. Domestic appliance (1;23) according to one of the preceding claims, **characterised in that** at the working fluid-side at least one of the heat exchangers (6,8A,8B) has/have 250 to 1,500 channels for conveying the working fluid, in particular 500 to 1,000 channels.

5. Domestic appliance (1;23) according to one of the preceding claims, **characterised in that** a process air volume flow rate of 180 to 230 m³/h can be generated.

6. Domestic appliance (1;23) according to one of the preceding claims, **characterised in that** there is an entry temperature into the treatment chamber (5) of less than 120°C and an exit temperature from the treatment chamber (5) of 65°C to 85°C, in particular of about 75°C.

7. Domestic appliance (1;23) according to one of the preceding claims, **characterised in that** the heat pump (V1;V2) has at least two displacement pistons (12,15) whose piston diameter is between 75 mm and 200 mm, in particular between 100 mm and 150 mm.

8. Domestic appliance (1;23) according to one of the preceding claims, **characterised in that** the heat pump (V1;V2) has at least two displacement pistons (12, 15) whose piston stroke is between 25 mm and 75 mm, in particular between 30 mm and 50 mm.

9. Domestic appliance (1;23) according to one of the preceding claims, **characterised in that** the heat pump (V1;V2) has at least two displacement pistons (12, 15) whose medium pressure is between 20 bar and 75 bar, in particular between 30 bar and 50 bar.

10. Domestic appliance (1;23) according to one of the preceding claims, **characterised in that** the heat pump (V1;V2) has at least two displacement pistons (12, 15) whose stroke frequency is between 10 Hz and 15 Hz respectively.

11. Domestic appliance (1;23) according to one of the preceding claims, **characterised in that** the heat pump (V1;V2) has at least two regenerators (13,16) which each have a diameter between 80 mm and 140 mm.

12. Domestic appliance (1;23) according to claim 11, **characterised in that** a first cold regenerator (13) has a length between 20 mm and 60 mm, in particular between 30 mm and 50 mm.

13. Domestic appliance (1;23) according to claim 11 or 12, **characterised in that** fibres of a first cold regenerator (13) have a diameter between 30 µm and 80 µm, specifically between 40 µm and 70 µm.

14. Domestic appliance (1;23) according to one of claims 11 to 13, **characterised in that** a second warm regenerator (16) has a length between 60 mm and 150 mm, in particular between 80 mm and 120 mm.

15. Domestic appliance (1;23) according to one of claims 11 to 14, **characterised in that** fibres of a second warm regenerator (16) have a diameter between 30 µm and 120 µm, specifically between 50 µm and 100 µm.

16. Domestic appliance (1;23) according to claim 1 or 2, **characterised in that** the heat pump (V1;V2) has at least two displacement pistons (12,15) which are constructed as part of a free-piston vibrating system.

17. Domestic appliance (1;23) according to claim 16, **characterised in that** the displacement pistons (12,15) are coupled via a spring element (27) which has a spring constant between 3 N/mm and 15 N/mm, in particular between 6 N/mm and 7 N/mm.

18. Domestic appliance (1;23) according to one of claims 16 or 17, **characterised in that** a first cold displacement piston (12) has a weight between 3 kg and 6 kg, in particular between 4 kg and 5 kg.

19. Domestic appliance (1;23) according to one of claims 16 to 18, **characterised in that** a second hot displacement piston (15) has a weight between 1 kg and 2 kg.

20. Domestic appliance (1;23) according to one of claims 16 to 19, **characterised in that** a first cold displacement piston (12) has a recess for at least partially receiving a body (25) fixedly arranged in a working volume (21), the body (25) immersing into the recess as a function of a stroke of the cold displacement piston (12).

21. Domestic appliance (1;23) according to claim 20, **characterised in that** the body (25) has a cylindrical basic shape, in particular with a diameter between 25 mm and 75 mm, specifically between 40 mm and 50 mm.

22. Domestic appliance (1;23) according to one of the preceding claims, **characterised in that** it has an additional heat exchanger.

## Revendications

1. Appareil ménager (1 ; 23) pour sécher un article humide (2) au moyen d'un écoulement d'air de processus susceptible d'être mené dans un canal d'air de processus (3), lequel écoulement est susceptible de traverser :
- une chambre de traitement (5) avec l'article (2),
- un dispositif de refroidissement (6, 7) pour refroidir et condenser l'écoulement d'air de processus (3) après la traversée de la chambre de traitement (5), dans lequel le dispositif de refroidissement (6, 7) présente un premier échangeur de chaleur (6) permettant d'évacuer de la chaleur de l'écoulement d'air de processus vers un fluide de travail et, en aval
- un dispositif de chauffage (6, 7) pour chauffer l'écoulement d'air de processus avant la traversée de la chambre de traitement (5), dans lequel le dispositif de chauffage (8) présente un deuxième échangeur de chaleur (8 ; 8A ; 8B) permettant d'évacuer de la chaleur du fluide de travail vers l'écoulement d'air de processus,
**caractérisé en ce que**
le fluide de travail est mené dans une pompe à chaleur (V1 ; V2) qui travaille après un cycle thermodynamique à gaz régénérateur, lequel englobe un cycle thermodynamique à gaz de Vuilleumier,
- au niveau du premier échangeur de chaleur (6), une température de paroi d'une paroi de séparation entre une zone d'air de processus et une zone de fluide de travail se trouve au moins à proximité d'une entrée d'air de processus entre 50°C et 80°C, en particulier aux alentours de 70°C,
- au niveau du deuxième échangeur de chaleur (8 ; 8A ; 8B), une température de paroi d'une paroi de séparation entre une zone d'air de processus et une zone de fluide de travail se trouve au moins à proximité d'une entrée d'air de processus entre 90°C et 140°C, en particulier entre 110°C et 130°C, et
- un volume de travail chaud (22) de la pompe à chaleur (V1 ; V2) présente un niveau de température de plus de 500°C.

2. Appareil ménager (1 ; 23) selon la revendication 1, **caractérisé en ce que** les canaux côté fluide de travail présentent respectivement une longueur entre 100 mm et 150 mm et/ou un diamètre respectif entre 1,5 mm et 2,5 mm.

3. Appareil ménager (1 ; 23) selon l'une des revendications précédentes, **caractérisé en ce qu'**un côté air de processus, en particulier ses lamelles, de l'échangeur de chaleur (6, 8A, 8B) est dimensionné de telle sorte qu'une perte d'écoulement de l'air de processus dans les échangeurs de chaleur (6, 8A, 8B) est inférieure à 250 Pa au point de fonctionnement.

4. Appareil ménager (1 ; 23) selon l'une des revendications précédentes, **caractérisé en ce qu'**au moins un des échangeurs de chaleur (6 ; 8A ; 8B) présente côté fluide de travail 250 à 1500 canaux pour le passage du fluide de travail, en particulier 500 à 1000 canaux.

5. Appareil ménager (1 ; 23) selon l'une des revendications précédentes, **caractérisé en ce qu'**un débit volumique d'air de processus de 180 à 230 m³/h peut être généré.

6. Appareil ménager (1 ; 23) selon l'une des revendications précédentes, **caractérisé en ce qu'**une température d'entrée dans la chambre de traitement (5) est inférieure à 120°C et une température de sortie de la chambre de traitement (5) se situe entre 65°C et 85°C, en particulier aux alentours de 75°C.

7. Appareil ménager (1 ; 23) selon l'une des revendications précédentes, **caractérisé en ce que** la pompe à chaleur (V1 ; V2) présente au moins deux pistons déplaceurs (12, 15) dont le diamètre se situe entre 75 mm et 200 mm, en particulier entre 100 mm et 150 mm.

8. Appareil ménager (1 ; 23) selon l'une des revendications précédentes, **caractérisé en ce que** la pompe à chaleur (V1 ; V2) présente au moins deux pistons déplaceurs (12, 15) dont la course se situe entre 25 mm et 75 mm, en particulier entre 30 mm et 50 mm.

9. Appareil ménager (1 ; 23) selon l'une des revendications précédentes, **caractérisé en ce que** la pompe à chaleur (V1 ; V2) présente au moins deux pistons déplaceurs (12, 15) dont la pression intermédiaire se situe entre 20 bars et 75 bars, en particulier entre 30 bars et 50 bars.

10. Appareil ménager (1 ; 23) selon l'une des revendications précédentes, **caractérisé en ce que** la pompe à chaleur (V1 ; V2) présente au moins deux pistons déplaceurs (12, 15) dont la fréquence de course se situe respectivement entre 10 Hz et 15 Hz.

11. Appareil ménager (1 ; 23) selon l'une des revendications précédentes, **caractérisé en ce que** la pompe à chaleur (V1 ; V2) présente au moins deux régénérateurs (13, 16) dont le diamètre respectif se situe entre 80 mm et 140 mm.

12. Appareil ménager (1 ; 23) selon la revendication 11, **caractérisé en ce qu'**un premier régénérateur froid (13) présente une longueur entre 20 mm et 60 mm, en particulier entre 30 mm et 50 mm.

13. Appareil ménager (1 ; 23) selon la revendication 11 ou 12, **caractérisé en ce que** les fibres d'un premier régénérateur froid (13) présentent un diamètre entre 30 µm et 80 µm, spécialement entre 40 µm et 70 µm.

14. Appareil ménager (1 ; 23) selon l'une des revendications 11 à 13, **caractérisé en ce qu'**un deuxième régénérateur chaud (16) présente une longueur entre 60 mm et 150 mm, en particulier entre 80 mm et 120 mm.

15. Appareil ménager (1 ; 23) selon l'une des revendications 11 à 14, **caractérisé en ce que** les fibres d'un deuxième régénérateur chaud (16) présentent un diamètre entre 30 µm et 120 µm, spécialement entre 50 µm et 100 µm.

16. Appareil ménager (1 ; 23) selon la revendication 1 ou 2, **caractérisé en ce que** la pompe à chaleur (V1 ; V2) présente au moins deux pistons déplaceurs (12, 15) exécutés sous forme de partie d'un système oscillant à piston flottant.

17. Appareil ménager (1 ; 23) selon la revendication 16, **caractérisé en ce que** les pistons déplaceurs (12, 15) sont couplés via un élément à ressort (27) présentant une constante de raideur entre 3 N/mm et 15 N/mm, en particulier entre 6 N/mm et 7 N/mm.

18. Appareil ménager (1 ; 23) selon l'une des revendications 16 ou 17, **caractérisé en ce qu'**un premier piston déplaceur froid (12) présente un poids entre 3 kg et 6 kg, en particulier entre 4 kg et 5 kg.

19. Appareil ménager (1 ; 23) selon l'une des revendications 16 à 18, **caractérisé en ce qu'**un deuxième piston déplaceur chaud (15) présente un poids entre 1 kg et 2 kg.

20. Appareil ménager (1 ; 23) selon l'une des revendications 16 à 19, **caractérisé en ce qu'**un premier piston déplaceur froid (12) présente une réservation afin d'accueillir au moins partiellement un corps (25) disposé de manière fixe dans un volume de travail (21), dans lequel le corps (25) plonge dans la réservation en fonction d'une course du piston déplaceur froid (12).

21. Appareil ménager (1 ; 23) selon la revendication 20, **caractérisé en ce que** le corps (25) présente une forme de base cylindrique, en particulier avec un diamètre entre 25 mm et 75 mm, spécialement entre 40 mm et 50 mm.

22. Appareil ménager selon l'une des revendications précédentes, **caractérisé en ce qu'**il présente un échangeur de chaleur supplémentaire.
